(19) Europäisches Patentamt / European Patent Office / Office européen des brevets

(11) **EP 2 372 674 A1**

(12) **DEMANDE DE BREVET EUROPEEN**

(43) Date de publication:
**05.10.2011 Bulletin 2011/40**

(51) Int Cl.:
***G09B 21/00*** *(2006.01)* ***G06F 3/01*** *(2006.01)*

(21) Numéro de dépôt: **11158874.5**

(22) Date de dépôt: **18.03.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.03.2010 FR 1052268**

(71) Demandeur: **FRANCE TELECOM**
**75015 Paris (FR)**

(72) Inventeurs:
• **Lefebvre, Grégoire**
**38920, Crolles (FR)**

• **Petit, Eric**
**38400, St Martin d'Heres (FR)**
• **Zijp-Rouzier, Sophie**
**38700, La Tronche (FR)**
• **Strachan, Steven**
**Sandyford, Dublin 18 (IE)**

(74) Mandataire: **Delumeau, François Guy et al**
**Cabinet Beau de Loménie**
**158, rue de l'Université**
**75340 Paris Cedex 07 (FR)**

(54) **Procédé de génération d'un signal de retour et terminal à interface tactile mettant en oeuvre un tel procédé**

(57) Ce procédé permet de générer un signal de retour par un terminal à interface tactile pendant le déplacement d'un pointeur en contact avec cette interface. Ce procédé comporte :
- une étape d'estimation (E10) de paramètres représentatifs du déplacement du point de contact du pointeur avec l'interface tactile ;
- une étape (E26) d'estimation d'un paramètre représentatif de la courbure de la trajectoire à partir des paramètres représentatifs du déplacement calculés ;- une étape (E20) de calcul d'un signal de retour à partir de ces paramètres ; et
- une étape (E30) d'émission de ce signal de retour vers un module du terminal apte à restituer un retour sonore et/ou vibratoire à l'utilisateur à partir de ce signal de retour pendant le déplacement du pointeur.

FIG.2

EP 2 372 674 A1

**Description**

La présente invention se situe dans le domaine des terminaux à interface tactile.

Elle vise plus particulièrement à améliorer l'interaction entre un utilisateur et l'interface homme-machine d'un tel terminal.

On connaît actuellement le développement de terminaux dont l'interaction avec l'utilisateur peut se faire de façon tactile, par exemple avec un stylet mais préférentiellement avec un ou plusieurs doigt(s).

Par exemple, la sélection d'un bouton virtuel peut se faire en appuyant sur l'interface tactile du terminal comme il est d'usage de le faire avec le bouton réel d'une souris.

L'interaction tactile avec ces terminaux devient de plus en plus intuitive, les fabricants offrant des fonctions de plus en plus complexes qui peuvent répondre à une interaction "naturelle".

Dans le domaine de la gestion des albums de photographies numériques, il est ainsi connu de faire glisser un doigt sur une photographie pour demander l'affichage d'une photographie suivante, ou d'écarter deux doigts placés sur une image pour en demander l'agrandissement.

On s'intéresse plus particulièrement, dans cette invention, au retour ("Feedback") sonore ou vibratoire du terminal en réponse à une telle interaction tactile.

Le document "Tactile Interfaces for Small Touch Screens'" de I. Poupyrev et S. Maruyama publié en 2003 propose de prédéfinir un certain nombre de retours tactiles, en l'occurrence cinq retours "$T^1$ à $T^5$" destinés à être générés par le terminal à différentes étapes prédéfinies de l'interaction tactile de l'utilisateur avec l'interface homme-machine de ce terminal.

Par exemple, lorsque l'utilisateur commence un geste en touchant un élément graphique, un premier retour vibratoire $T^1$ est généré. Puis, lorsqu'il déplace son doigt sur l'écran, le retour $T^2$ est généré si aucun objet graphique n'est associé, le retour $T^3$ étant proposé dans le cas contraire, pour illustrer le mouvement d'un objet virtuel déplacé sur l'écran de ce terminal. Enfin, un retour $T^4$ indique la fin du parcours du doigt, le cinquième retour $T^5$ pouvant signifier la fin du déplacement de l'objet virtuel.

Ce document démontre que de tels retours tactiles offrent un contrôle plus précis à l'utilisateur tout en réduisant sa charge cognitive.

Malheureusement, la technique de retour tactile présentée ci-dessus est insuffisante, notamment pour l'utilisation des terminaux par les malvoyants.

Objet et résumé de l'invention

Plus précisément, l'invention concerne un procédé de génération d'un signal de retour par un terminal à interface tactile pendant le déplacement d'un pointeur en contact avec cette interface. Ce procédé comporte :

- une étape d'estimation de paramètres représentatifs du déplacement du point de contact de ce pointeur avec l'interface tactile du terminal ;
- une étape de calcul d'un signal de retour à partir de ces paramètres ; et
- une étape d'émission de ce signal de retour vers un module du terminal apte à restituer un retour sonore et/ou vibratoire à l'utilisateur à partir de ce signal de retour pendant le déplacement du pointeur.

Corrélativement, l'invention concerne un terminal à interface tactile comportant :

- des moyens d'estimation de paramètres représentatifs du déplacement d'un point de contact d'un pointeur avec cette interface tactile ;
- des moyens de calcul, pendant le déplacement du pointeur, d'un signal de retour à partir de ces paramètres ; et
- des moyens d'émission de ce signal de retour vers un module du terminal apte à restituer un retour sonore et/ou vibratoire à l'utilisateur à partir de ce signal de retour pendant le déplacement du pointeur.

Ainsi, conformément à l'invention, le signal de retour n'est pas, comme dans l'art antérieur précité, prédéterminé, mais calculé pendant le transfert du déplacement du pointeur, à partir des paramètres représentatifs de ce déplacement.

Par ailleurs, et de façon très avantageuse pour l'utilisateur, le retour du terminal est effectué pendant le déplacement du pointeur, ce retour étant perçu de façon continue par l'utilisateur, tout au cours du déplacement du pointeur.

En pratique, et de façon connue, un terminal à interface tactile par exemple à écran résistif ou capacitif, comporte des capteurs, par exemple acoustiques ou infrarouges, aptes à déterminer, à un instant donné, la position d'un point de contact entre le pointeur et cet écran.

Ce pointeur peut par exemple être constitué par un stylet ou par un doigt de l'utilisateur.

L'invention propose donc de déterminer la position de ce pointeur en continu, ou plus précisément selon une fréquence suffisamment élevée pour être perçue comme continue par l'utilisateur, et de générer un signal de retour recalculé à partir des paramètres représentatifs du déplacement du pointeur, pour restituer à l'utilisateur un retour en temps réel basé sur la dynamique du déplacement du pointeur.

Le procédé et le terminal selon l'invention améliorent considérablement le ressenti de la trajectoire du pointeur sur l'interface tactile du terminal (portion rectiligne, courbure, changement de direction, ...) et agit comme un guide pour le geste de l'utilisateur.

En ce sens, l'invention trouve une utilisation privilégiée, mais non limitative, pour les utilisateurs malvoyants.

Les paramètres estimés au cours de l'étape d'estimation, peuvent être constitués par les positions successives du point de contact au cours du déplacement, typiquement en coordonnées cartésiennes ou angulaires par rapport à une origine définie sur l'interface homme-machine du terminal.

Ils peuvent aussi notamment être constitués par la vitesse ou par l'accélération de ce point de contact.

Dans un mode particulier de réalisation de l'invention, les paramètres estimés au cours de l'étape d'estimation sont utilisés au cours d'une étape d'estimation d'un paramètre représentatif de la courbure de la trajectoire du point de contact.

Dans ce mode de réalisation, le retour sonore et/ou vibratoire varie avec ce paramètre de courbure.

Il est donc ainsi possible de restituer un retour de vibration dont l'intensité augmente ou diminue avec la courbure. On notera, que dans ce mode de réalisation, le signal restitué ne dépend pas de la position du point de contact sur l'écran, mais uniquement de la trajectoire du point de contact sur l'interface.

Ce mode de réalisation de l'invention peut notamment être utilisé pour apporter un retour vibratoire ou sonore en réponse à un déplacement du pointeur représentant une forme symbolique (lettre, chiffre, forme géométrique, ...) par exemple dans une zone de saisie de l'interface tactile.

Ce mode de réalisation est très utile aux malvoyants, car le retour vibratoire ou sonore permet de tels utilisateurs une excellente perception de leur gestuelle. Autrement dit, ce retour peut permettre de guider l'utilisateur dans son geste en améliorant le ressenti de la trajectoire du pointeur sur l'interface tactile (portion rectiligne, courbure, de direction, ...). Par exemple, si l'utilisateur décide de tracer le chiffre « 8 », un retour tactile ou sonore sera produit tout au long du tracé et l'utilisateur ressentira une amplitude plus élevée de la vibration en haut et en bas du chiffre « 8 », dans les parties du tracé où le rayon de courbure est le plus élevé et une amplitude plus faible dans les parties rectilignes.

Dans un mode particulier de réalisation de l'invention, une grille de rugosité virtuelle est calculée et associée à ladite interface tactile. Elle constitue un modèle tactile humain, notamment pour un doigt de la main.

Une telle grille de rugosité définit la modulation spatiale du signal porteur vibro-tactile pour faire ressentir une surface non plane. Ce phénomène peut être nommé texture haptique ou texture tactile.

Par exemple, cette grille de rugosité peut être utilisée pour estimer un paramètre représentatif de la vitesse du point de contact.

Dans un mode particulier de réalisation de l'invention, cette grille de rugosité peut être utilisée pour estimer un paramètre représentatif de la vitesse du point de contact. Cette grille de rugosité permet de restituer un rendu sonore et/ou vibratoire qui varie en fonction de la vitesse de déplacement du point de contact. L'idée sous-jacente, est de restituer plus ou moins d'informations à l'utilisateur en fonction de la vitesse de déplacement du point de contact. Dans un mode particulier de réalisation, cette grille de rugosité peut être spécifiée par un mélange de fonctions gaussiennes. Le retour restitué à l'utilisateur dépendant, dans ce mode de réalisation, de la granularité des pics de ces gaussiennes.

La distribution des fonctions gaussiennes sur la surface de l'écran tactile, peut par exemple être homogène. On peut alors faire l'analogie entre ce mode de réalisation de l'invention et le parcours d'un doigt sur les dents d'un peigne : lorsque le doigt parcourt lentement la ligne des dents du peigne, le retour tactile produit une grande variété de détails avec la rugosité de chaque dent du peigne. Par contre, lorsque le parcours est rapide, la sensation de retour tactile offre moins d'informations et on ne ressent alors plus que quelques éléments particuliers.

Dans ce mode de réalisation, l'invention simule des pics et des creux dans un plan bidimensionnel correspondant à la dimension de l'écran ; ainsi, lorsque le pointeur parcourt de façon rectiligne la surface de l'écran, le retour sonore et/ou vibratoire restitué à l'utilisateur est amplifié à chaque pic, et gagne en lorsque le pointeur ralentit.

Pour faire ressentir à l'utilisateur une texture non ou non homogène, on peut utiliser une distribution de fonctions gaussiennes non homogène.

Par exemple, on pourra prévoir une distribution de gaussiennes plus importante en périphérie de l'interface tactile ou au niveau d'un bouton virtuel de l'interface homme-machine. Une telle utilisation de la grille de rugosité aide fortement un utilisateur mal voyant à se spatialiser, le retour vibratoire lui donnant une indication sur le fait qu'il se rapproche ou s'éloigne de la zone de distribution resserrée autrement dit sur l'évolution de la distance entre le point de contact et l'élément considéré de l'interface tactile au cours de sa gestuelle.

Lorsque l'invention est utilisée pour apporter un retour à un tracé symbolique, ce mode de réalisation est particulièrement avantageux pour permettre à l'utilisateur de vérifier qu'il reste bien éloigné des bords de la dalle par exemple. Mais ce mode de réalisation de l'invention trouve une application particulièrement avantageuse pour assister l'utilisateur, non pas dans une gestuelle symbolique, mais pour sélectionner un objet graphique, par exemple un bouton d'un menu, le retour tactile ou vibratoire lui permettant de détecter s'il se rapproche ou s'il s'éloigne de l'objet concerné.

Dans un mode particulier de réalisation, les différentes étapes du procédé de génération d'un signal de retour sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de génération d'un signal de retour tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier sur un réseau de Internet.

Alternativement, le support d'informations peut être un circuit intégré dans lequel le programme est incorporé, le circuit étant adapté pour exécuter ou pour être utilisé dans l'exécution du procédé en question.

L'invention vise aussi un terminal comportant un dispositif tel que mentionné ci-dessus.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un terminal conforme à un mode particulier de réalisation de l'invention ;
- la figure 2 représente sous forme d'organigramme les principales étapes d'un procédé de génération conforme à l'invention ;
- les figures 3A, 3B et 3C représentent des signaux pouvant être utilisés dans un mode particulier de mise en oeuvre de l'invention ;
- la figure 4 illustre un exemple de grille de rugosité pouvant être utilisée dans l'invention ;
- la figure 5 illustre les principales sous-étapes d'une étape d'estimation d'une courbure locale pouvant être mise en oeuvre dans un mode particulier de réalisation de l'invention ;
- les figures 6 et 7 illustrent des sous-étapes pouvant être utilisées dans un calcul de courbure dans un mode particulier de mise en oeuvre de l'invention.

Description détaillée d'un mode de réalisation de l'invention

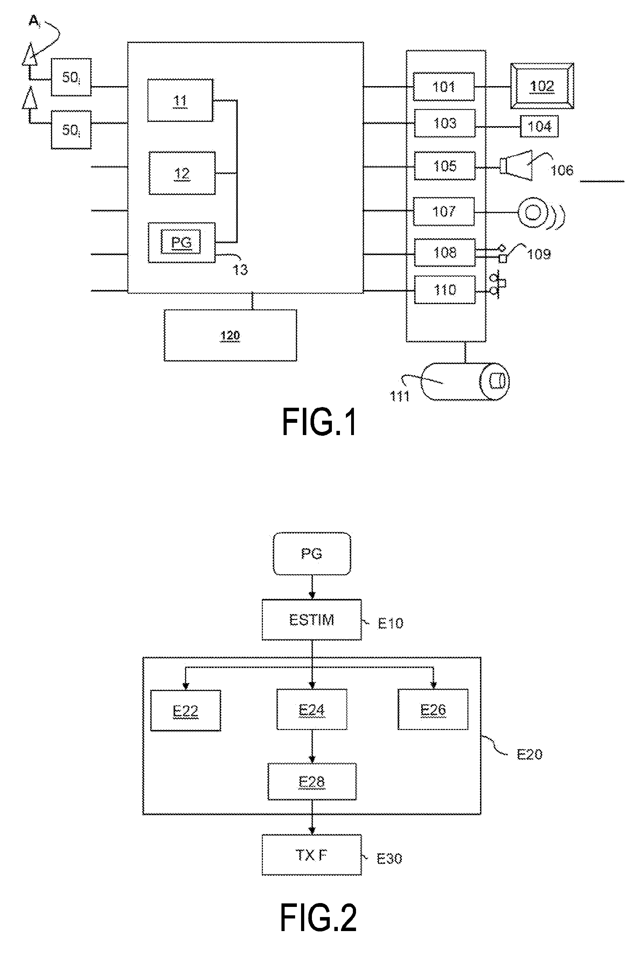

La **figure 1** représente un terminal 100 conforme à un mode de réalisation de l'invention.

Dans l'exemple de réalisation décrit ici, ce terminal 100 est un terminal communicant. Il comporte une pluralité de modules de communication mobiles $50_i$ chacun étant associé à une antenne $A_i$. Ces modules de communication peuvent par exemple être constitués par des modules de communication GSM, EDGS, GPRS, UMTS, des modules de localisation de type GPS ou TCS, des modules de réception de télévision numérique (DTV), ou de modules de communication conformes aux technologies Bluetooth et Wifi.

Le terminal 100 comporte également un ensemble de composants que l'on trouve traditionnellement dans un téléphone mobile, à savoir notamment:

- un module vidéo 101 réalisant l'interface avec un écran 102;
- un module 103 de contrôle d'un clavier 104 ;
- un module 105 d'interface avec un microphone 106;
- un module vibratoire 107 ;
- un chargeur de batterie 108 pouvant être connecté à une alimentation électrique 109 ;
- un module 110 de gestion de l'énergie ; et
- une batterie 111.

Conformément à l'invention, le terminal 100 comporte une interface tactile 120 avec laquelle l'utilisateur peut interagir en utilisant un stylet, un doigt, ou tout autre type de pointeur.

Dans le mode de réalisation décrit ici, l'architecture matérielle du terminal 100 comporte les éléments que l'on trouve dans un ordinateur conventionnel. Le terminal 100 comporte en particulier un processeur 11, une mémoire vive de type RAM 12 et une mémoire morte de type ROM 13 comportant un certain nombre d'applications pouvant être exécutées par le processus 11 en coopération avec la mémoire vive 12.

La mémoire morte de type ROM 13 constitue un support d'enregistrement conforme à l'invention. Ce support d'enregistrement comporte un programme d'ordinateur PG comprenant des instructions pour permettre l'exécution, par le processeur 11, des étapes du procédé de génération d'un signal de retour conforme à l'invention et qui seront décrites en référence à la figure 2.

Ainsi, comme il sera précisé ultérieurement, le processeur 11, en mettant en oeuvre le programme d'ordinateur PG, est apte à :

- estimer les paramètres représentatifs du déplacement d'un point de contact d'un pointeur avec l'interface tactile 120 du terminal 100 ;
- calculer, pendant le déplacement de ce pointeur, un signal de retour à partir de ces paramètres ; et
- émettre le signal de retour vers le module 107 de vibration, celui-ci étant apte à restituer un retour vibratoire à l'utilisateur à partir de ce signal de retour pendant le déplacement du pointeur.

En référence à la **figure 2,** nous allons maintenant décrire les principales étapes d'un procédé de génération de signal de retour conforme à l'invention.

D'une façon générale, ce procédé comporte trois étapes E10 exécutées en boucle à savoir :

- une étape E10 d'estimation de paramètres représentatifs du déplacement du point de contact d'un pointeur avec l'interface tactile 120 ;
- une étape E20 de calcul d'un signal de retour F à partir de ces paramètres ; et
- une étape E30 d'émission de ce signal de retour F vers le module 107, celui-ci étant apte à restituer un retour vibratoire à l'utilisateur à partir de ce signal de retour pendant le déplacement du pointeur sur la dalle tactile 120.

Dans l'exemple de réalisation décrit ici, le calcul du signal de retour F (étape générale 120) se fait en quatre sous-étapes, à savoir :

- une étape E22 de génération d'un signal porteur ;
- une étape E24 de calcul d'une grille de rugosité virtuelle ;
- une étape E26 d'estimation d'une courbure locale ; et
- une étape E28 de combinaison de ces informations pour générer le signal de retour.

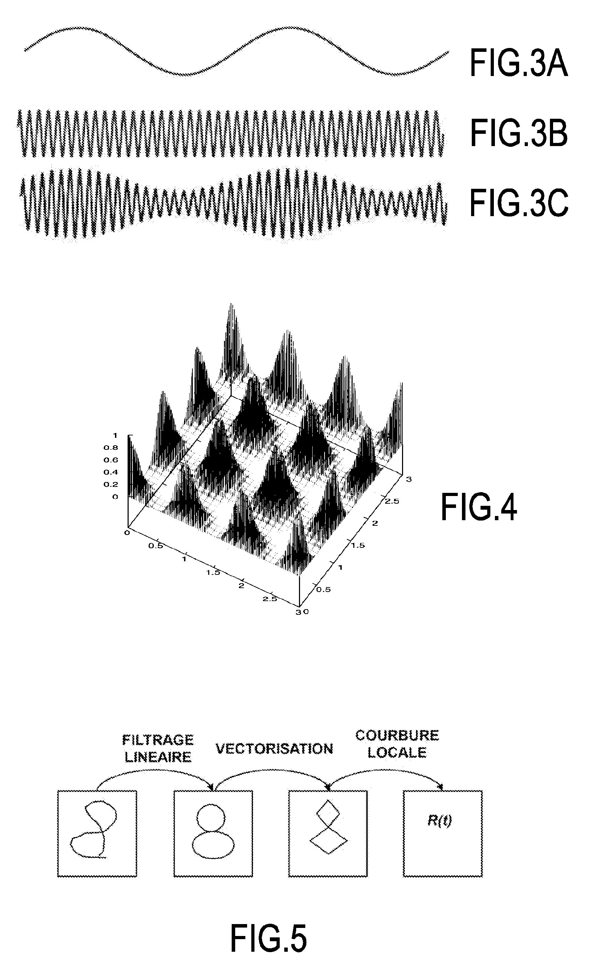

Les figures 3A, 3B et 3C représentent respectivement un signal modulant, un signal de porteuse, et un signal modulé pouvant être utilisés dans un mode particulier de réalisation de l'invention.

Le signal porteur est la base du retour tactile. Il diffuse par défaut de faibles vibrations en continu non perceptibles ou faiblement perceptibles par l'utilisateur. Ces vibrations seront modulées par la vitesse de la trajectoire du pointeur grâce à la grille de rugosité et par la forme de cette trajectoire après estimation de la courbure locale.

De façon connue, la modulation d'amplitude consiste à faire varier l'amplitude du signal porteur de fréquences élevées en fonction d'un signal basses fréquences. Ce dernier contient l'information à transmettre, lié aux différents types de la trajectoire du pointeur. En pratique, il est obtenu par multiplication du signal porteur par le signal basses fréquences modulant.

Plus précisément, soit:

le signal modulant périodique, de pulsation $\omega = 2\pi.F$ :

$$s_m(t) = S_m \sin(w_m t)$$

et la porteuse définie par :

$$s_p(t) = S_p \sin(w_p t)$$

le signal modulé est :

$$s_f(t) = S_p \big[1 + kS_m \sin(w_m t)\big] \sin(w_p t)$$

avec $kS_m$, un indice de modulation inférieur à 1.

La **figure 4** illustre une grille de rugosité R(t) pouvant être utilisée dans un mode particulier de mise en oeuvre de l'invention. L'utilisation de cette grille permet de faire ressentir le déplacement du pointeur, par exemple d'un de ses doigts, sur la dalle tactile 120 et en particulier la distance parcourue, en fonction de la vitesse de déplacement de ce doigt.

La rugosité est, dans cet exemple, définie par

$$R(t) = R(x(t), y(t))$$

avec

$$R(x, y) = \sum_{i=0}^{I} \sum_{j=0}^{J} \exp\left(-\frac{(x - x_i)^2 + (y - y_j)^2}{\sigma}\right) \quad (1)$$

Dans cet exemple, R(x, y) est une grille de rugosité sous la forme d'un quadrillage de la surface tactile, constituée, dans cet exemple par un mélange de fonctions gaussiennes. Dans l'expression (1) ci-dessus, i est l'indice des abscisses des noeuds de la grille et j celui des ordonnées, I est l'indice maximal des abscisses et J est l'indice maximal des ordonnées, $\sigma$ la largeur de chaque gaussienne, les points $(x_i, y_j)$ étant les centres des gaussiennes disposées sur chaque noeud de la grille de rugosité.

La **figure 5** illustre, dans un exemple de réalisation de l'invention, trois sous-étapes de l'étape E26 d'estimation de la courbure locale C(t), cette courbure étant utilisée pour amplifier le signal porteur pour faire ressentir à l'utilisateur la forme de la trajectoire du pointeur. Ces trois sous-étapes représentées à la figure 5 sont :

- une sous-étape de filtrage linéaire,
- une sous-étape de vectorisation, et
- une sous-étape d'estimation de la courbure locale et de l'abscisse curviligne.

La première sous-étape (filtrage linéaire) est un filtre de lissage des données de trajectoire. Il s'agit dans cet exemple, d'un filtre passe-bas à réponse impulsionnelle finie qui élimine les points perturbateurs (dit "non indicatifs") dans le but de simplifier les données de trajectoire pour un traitement postérieur. La convolution de l'ensemble des points de la trajectoire par un filtre de réponse impulsionnelle finie est calculée directement par balayage des points de la trajectoire et par calcul de la somme pondérée des valeurs des de chacun de ces points.

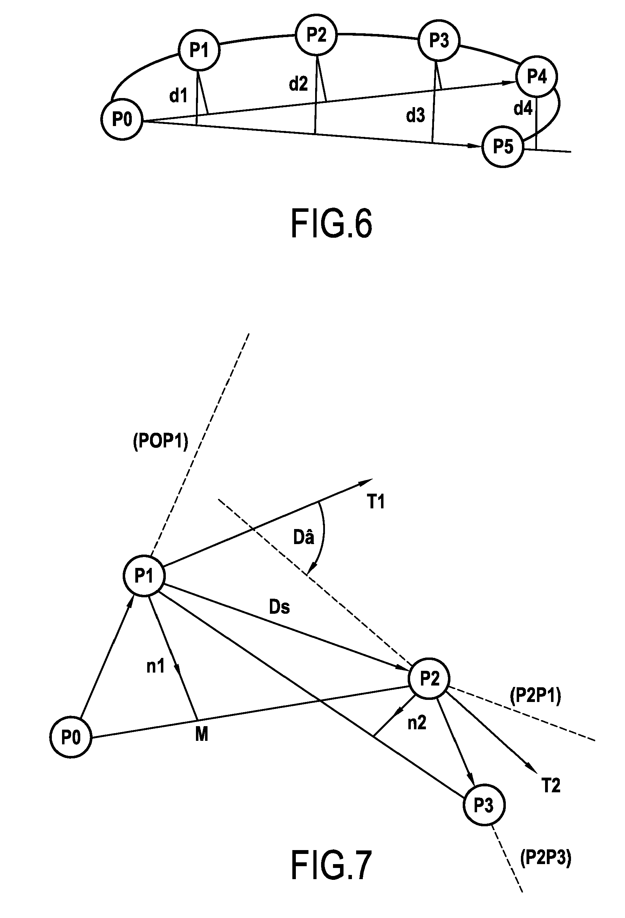

La seconde sous-étape (vectorisation) consiste à faire une approximation des données filtrées par des segments rectilignes. Cette vectorisation se fait sur une fenêtre glissante de taille D telle que représentée à la **figure 6**.

Si on appelle $P_n$ le point à partir duquel le traitement de vectorisation est effectué, cette fenêtre glissante récupère les D points futurs à savoir les points $P_n$, $P_{n+1}$, .., $P_{n+D-1}$ et regarde si le segment $[P_n, P_{n+D-1}]$ passe ou non au plus près des D points.

Si c'est le cas, cette sous-étape renvoie les deux points constituant le segment, sinon elle diminue la taille de la fenêtre d'un point et recommence l'opération.

La troisième et dernière sous-étape (estimation de la courbure locale et de l'abscisse curviligne) utilise les points des segments calculés précédemment afin de déterminer :

- l'angle Dâ ; et
- l'abscisse curviligne Ds pour calculer le rayon de courbure r.

La **figure 7** illustre le calcul de l'angle Dâ et de l'abscisse curviligne Ds au point P1. Sur cette figure :

- Dâ est l'angle formé par deux vecteurs T1, T2. Le vecteur T1 est le vecteur de la bissectrice des droites $(P_0P_1)$ et $(P_1P_2)$, et T2 est le vecteur de la bissectrice des droites $(P_1P_2)$ et $(P_2P_3)$. ;
- Ds est la longueur du segment $[P_1P_2]$,

L'estimation C(1) de la courbure au temps 1 en P1 est définie par:

$$C(1) = \frac{D\hat{a}}{Ds}$$

Avec

$$Ds = \left\| \overrightarrow{P1P2} \right\|$$

et

$$D\hat{a} = \arcsin\left( \frac{\overrightarrow{n1} \times \overrightarrow{n2}}{\left\| \overrightarrow{n1} \right\| \left\| \overrightarrow{n2} \right\|} \right)$$

n1 et n2 étant les vecteurs normaux aux vecteurs T1, T2

L'étape E28 de combinaison permet de générer un de retour au cours du déplacement du sur l'écran par la des trois informations calculées respectivement aux étapes E22, E24 et E26, à savoir par la combinaison du signal porteur, de la rugosité et de la courbure locale.

Dans l'exemple de réalisation décrit ici, le signal de retour F(t) dépendant du temps est obtenu selon la formule suivante :

$$\boxed{F(t) = K_f C(t) R(t) S_p(t)}$$

avec $K_f$ facteur de pondération.

Dans l'exemple de réalisation décrit ici, ce signal est transmis, au cours de l'étape E30 au module 107 de vibration. Un rendu vibratoire est calculé et restitué à l'utilisateur en temps réel pendant le déplacement du pointeur sur la dalle tactile.

Dans un autre mode de réalisation, un signal sonore, avec ou sans vibration est restitué à l'utilisateur.

D'une façon générale, l'invention permet, grâce à la prise en compte de la courbure de son tracé et/ou de la vitesse de production de son geste de faire ressentir à l'utilisateur des perceptions par un retour sonore et/ou tactile fonction de sa gestuelle.

Ces informations peuvent par exemple être des informations sur la dynamique du geste produit, très utiles pour le guidage dans le tracé d'une information symbolique.

Ces informations peuvent aussi aider l'utilisateur à se repérer grâce à un retour d'informations représentatives de l'éloignement ou le rapprochement du pointeur par rapport à un élément particulier de l'interface tactile (bouton virtuel, bord de l'écran, ...).

**Revendications**

1. Procédé de génération d'un signal de retour par un terminal à interface tactile pendant le déplacement d'un pointeur en contact avec ladite interface, ce procédé comportant :

   - une étape d'estimation (E10) de paramètres représentatifs du déplacement du point de contact dudit pointeur avec ladite interface tactile ;
   - une étape (E26) d'estimation d'un paramètre représentatif de la courbure de la trajectoire à partir des paramètres représentatifs du déplacement calculés ;
   - une étape (E20) de calcul d'un signal de retour à partir desdits paramètres ; et
   - une étape (E30) d'émission dudit signal de retour vers un module dudit terminal apte à restituer un retour sonore et/ou vibratoire à l'utilisateur à partir dudit signal de retour pendant ledit déplacement.

2. Procédé de génération d'un signal de retour selon la revendication 1, **caractérisé en ce que** ladite étape de calcul d'un signal de retour comprend une sous-étape (E24) de calcul d'une grille de rugosité virtuelle associée à ladite interface tactile et **en ce qu'**elle génère le signal de retour par combinaison des valeurs d'un signal porteur, de la courbure estimée et de la grille de rugosité calculée au point de contact.

3. Procédé de génération d'un signal de retour selon la revendication 3, **caractérisé en ce que** ladite grille de rugosité virtuelle est spécifiée par un mélange de fonctions gaussiennes.

4. Procédé de génération d'un signal de retour selon la revendication 2 , **caractérisé en ce que** ladite grille de rugosité est spécifiée par une distribution homogène de fonctions gaussiennes.

5. Procédé de génération d'un signal de retour selon la revendication 2, **caractérisé en ce que** ladite grille de rugosité est spécifiée par une distribution non-homogène de fonctions gaussiennes représentative de l'évolution de la distance entre ledit point de contact et un élément de ladite interface tactile.

6. Procédé de génération d'un signal de retour selon la revendication 4, **caractérisé en ce que** ladite grille de rugosité est spécifiée par une distribution de fonctions gaussiennes resserrée à proximité dudit élément.

7. Procédé de génération d'un signal de retour selon la revendication 5 ou 6, **caractérisé en ce que** ledit élément est un objet graphique ou un bord de ladite interface tactile.

8. Dispositif de génération d'un signal de retour comportant:

   - des moyens d'estimation de paramètres représentatifs du déplacement d'un point de contact d'un pointeur avec l'interface tactile d'un terminal ;
   - des moyens d'estimation d'un paramètre représentatif de la courbure de la trajectoire à partir des paramètres représentatifs du déplacement calculés ;
   - des moyens de calcul, pendant le déplacement dudit pointeur, d'un signal de retour à partir desdits paramètres ; et
   - des moyens d'émission dudit signal de retour vers un module dudit terminal apte à restituer un retour sonore et/ou vibratoire à l'utilisateur à partir dudit signal de retour pendant ledit déplacement.

9. Terminal comportant un dispositif selon la revendication 8.

FIG.1

FIG.2

FIG.3A

FIG.3B

FIG.3C

FIG.4

FIG.5

FIG.6

FIG.7

Europäisches
Patentamt
European
Patent Office
Office européen
des brevets

## RAPPORT DE RECHERCHE EUROPEENNE

Numéro de la demande

EP 11 15 8874

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/085878 A1 (HEUBEL ROBERT W [US] ET AL) 2 avril 2009 (2009-04-02)<br>* alinéa [0019] - alinéa [0027] *<br>* alinéa [0013]; figure 3 *<br>----- | 1-9 | INV.<br>G09B21/00<br>G06F3/01 |
| X,D | POUPYREV I ET AL: "Tactile Interfaces for Small Touch Screens",<br>PROCEEDINGS OF THE 16TH ANNUAL ACM SYMPOSIUM ON USER INTERFACE SOFTWARE AND TECHNOLOGY : VANCOUVER, CANADA, NOVEMBER 2 - 5, 2003; [ACM SYMPOSIUM ON USER INTERFACE SOFTWARE AND TECHNOLOGY], NEW YORK, NY : ACM PRESS LNKD-DOI:10.1145/964696.964721,<br>vol. 5, no. 2, 1 janvier 2003 (2003-01-01), pages 217-220, XP002516572,<br>ISBN: 978-1-58113-636-4<br>* "Gestures and Tactile Feedback", page 219 *<br>----- | 1-9 | |
| A | WO 2009/074826 A1 (NEW TRANSDUCERS LTD [GB]; BOYD GEOFFREY A [GB]; COLLOMS MARTIN [GB]; C) 18 juin 2009 (2009-06-18)<br>* le document en entier *<br>----- | 1-9 | DOMAINES TECHNIQUES RECHERCHES (IPC)<br><br>G06F<br>G09B |

Le présent rapport a été établi pour toutes les revendications

| Lieu de la recherche | Date d'achèvement de la recherche | Examinateur |
|---|---|---|
| Munich | 11 juillet 2011 | Hanon, David |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 15 8874

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-07-2011

| Document brevet cité au rapport de recherche | | | Date de publication | Membre(s) de la famille de brevet(s) | | | Date de publication |
|---|---|---|---|---|---|---|---|
| US | 2009085878 | A1 | 02-04-2009 | CN | 101809526 | A | 18-08-2010 |
| | | | | EP | 2203798 | A1 | 07-07-2010 |
| | | | | JP | 2010541071 | A | 24-12-2010 |
| | | | | KR | 20100072219 | A | 30-06-2010 |
| | | | | WO | 2009042424 | A1 | 02-04-2009 |
| WO | 2009074826 | A1 | 18-06-2009 | CA | 2709101 | A1 | 18-06-2009 |
| | | | | CN | 101946226 | A | 12-01-2011 |
| | | | | EP | 2227730 | A1 | 15-09-2010 |
| | | | | JP | 2011507088 | A | 03-03-2011 |
| | | | | KR | 20100106474 | A | 01-10-2010 |
| | | | | US | 2010302184 | A1 | 02-12-2010 |

EPO FORM P0460

Pour tout renseignement concernant cette annexe : voir Journal Officiel de l'Office européen des brevets, No.12/82